(19) Europäisches Patentamt
European Patent Office
Office européen des brevets

(11) Numéro de publication: **0 121 709**
**A1**

(12) **DEMANDE DE BREVET EUROPEEN**

(21) Numéro de dépôt: **84101899.7**

(51) Int. Cl.³: **H 01 M 4/40**

(22) Date de dépôt: **23.02.84**

(30) Priorité: **28.02.83 FR 8303245**

(43) Date de publication de la demande: **17.10.84 Bulletin 84/42**

(84) Etats contractants désignés: **AT BE CH DE FR GB IT LI LU NL SE**

(71) Demandeur: **COMPAGNIE GENERALE D'ELECTRICITE Société anonyme dite:, 54, rue La Boétie, F-75382 Paris Cedex 08 (FR)**

(72) Inventeur: **Le Mehaute, Alain, 3, route de Belleville, F-91190 Gif sur Yvette (FR)**
Inventeur: **Belin, Claude Bât. E.-Résidence Eden Parc, Rue du Jeu de Mail des Abbés, F-34000 Montpellier (FR)**

(74) Mandataire: **Weinmiller, Jürgen et al, Zeppelinstrasse 63, D-8000 München 80 (DE)**

(54) **Electrode pour générateur électrochimique secondaire, son procédé de fabrication et générateur comportant une telle électrode.**

(57) Le matériau actif de l'électrode est constitué par un métal alcalin à l'état zérovalent inséré dans un composé.

Selon l'invention, ledit composé d'insertion recevant le métal alcalin présente un réseau tridimensionnel ordonné et est formé par au moins un composé intermétallique à clusters anioniques polyatomiques dont les atomes sont choisis parmi le gallium, le bore et l'aluminium et dont les contre-ions structurant sont choisis parmi les ions alcalins et alcalino-terreux.

EP 0 121 709 A1

0121709

Electrode pour générateur électrochimique secondaire, son procédé de fabrication et générateur comportant une telle électrode

La présente invention concerne une électrode pour générateur électrochimique secondaire, fonctionnant en milieu non aqueux, ainsi que son procédé de réalisation. Elle s'applique également aux générateurs faisant application d'une telle électrode.

On sait que dans les générateurs, dont l'électrode négative est formée en tout ou en partie de lithium, la stabilité cinétique de cette dernière, en présence d'un électrolyte non aqueux, ne permet de réaliser qu'un nombre limité de cycles charge/décharge.

Une telle limitation résulte notamment du fait qu'une telle électrode se passive par réaction avec le solvant et que par ailleurs elle est le siège de croissances dendritiques, ces deux phénomènes entraînant une limitation du rendement en charge lequel ne dépasse guère 50%.

On a donc cherché à remédier à de tels inconvénients et notamment à améliorer les caractéristiques de cyclage en milieu électrolytique non aqueux.

Il a été en particulier proposé entr'autres par M. GARREAU, J THEVENIN, D. WARIN, P. CAMPION, comme exposé dans "International Workshop on Lithium Non-Aqueous Batteries, Cleveland 1980", d'utiliser des électrodes de lithium et d'aluminium réalisées par électrodéposition de lithium sur un substrat d'aluminium ; le lithium en diffusant en phase solide forme un composé de type $Li_pAl$ dans lequel p est inférieur à 1, susceptible de libérer reversiblement le lithium au cours d'un nombre de cycles charge/décharge supérieur à la centaine et sous des densités de courant pouvant être supérieures à $1mA/cm^2$, pour des capacités cyclées supérieures à $1mAh/cm^2$, lorsque le cyclage a lieu à température ambiante.

Cependant, une telle électrode présente un certain nombre d'inconvénients résultant d'une part de l'augmentation de volume moléculaire d'un tel composé par rapport au lithium, et d'autre part du potentiel de l'électrode vis-à-vis de celui du lithium qui est de 350mV, ce qui se traduit par une diminution de l'énergie libre du système dans son ensemble.

Un certain nombre d'autres propositions ont été faites toujours dans le même but, et c'est ainsi que les alliages Li-Si et Li-B ont été

étudiés pour constituer l'électrode négative d'un générateur fonctionnant à haute température.

Cependant ces alliages présentent des transitions de phases et des activités en lithium trop faibles pour présenter un quelconque intérêt vis-à-vis des systèmes lithium/aluminium qui sont par ailleurs beaucoup plus réversibles.

Par ailleurs, on a constaté qu'avec les alliages il se produisait lors du cyclage une désagrégation (shedding) de l'électrode, diminuant ainsi sa durée de vie. Ceci résulte du fait que la structure recevant le lithium n'est pas organisée.

Il a également été proposé d'utiliser pour réaliser l'électrode négative le composé $Li_x$ Ca $Si_2$, dans lequel x est compris entre 0 et 4.

Cependant, dans tous les cas, la réversibilité de l'électrode à base de lithium reste faible et l'activité du lithium très inférieure à l'unité dans le cas de tel alliages.

Il a été aussi proposé, notamment dans le document FR-A 2 442 514, d'avoir recours à des composés d'insertion du lithium, pour constituer une électrode négative et plus particulièrement à des composés à structure lamellaire, à base de graphite. On peut citer par exemple les composés de formule $LiC_6$, $KC_8$, etc... Dans tous les cas, il s'agit de composés d'insertion présentant un réseau bidimensionnel, dans lesquels il y a intercalation du lithium et non insertion véritable. De tels composés ont l'inconvénient d'une part de présenter un potentiel chimique assez éloigné de celui du lithium, d'autre part, et surtout, de catalyser des réactions de décomposition des électrolytes.

Dans le but de remédier à de tels inconvénients on a donc cherché à mettre au point une structure d'électrode négative comportant du lithium, apte à être mise en oeuvre dans un générateur rechargeable à électrolyte non aqueux.

L'invention a pour objet une électrode pour générateur électrochimique secondaire fonctionnant en milieu non aqueux, dont le matériau actif, constitué par un métal alcalin à l'état zéro valent, est inséré dans un composé, caractérisée par le fait que ledit composé d'insertion recevant le métal alcalin présente un réseau tridimensionnel ordonné et est formé par au moins un composé intermétallique à clusters anioniques

polyatomiques, dont les atomes sont choisis parmi le gallium, le bore et l'aluminium et dont les contre-ions structurant sont choisis parmi les ions alcalins et alcalino-terreux.

L'invention a également pour objets un procédé de fabrication d'une telle électrode ainsi que les générateurs électrochimiques secondaires comportant celle-ci.

L'électrode conforme à l'invention comporte le composé de formule $A_z M_y G$ dans laquelle :

A est le métal alcalin constituant le matériau actif de l'électrode, notamment le lithium,

M est un métal alcalin ou alcalino-terreux de structure,

G est choisi parmi le gallium, le bore et l'aluminium,

avec de préférence :

$0 \leqslant z \leqslant 6$

$0,05 \leqslant y \leqslant 2$

En général M et A sont différents ; toutefois l'invention s'applique également lorsqu'ils sont identiques.

G étant constitué par le gallium, M est avantageusement choisi parmi Li, Na et K.

A titre d'exemples, on peut citer comme clusters anioniques homopolyatomiques structurés susceptibles d'accueillir le lithium, les corps représentés par les formules :

$K_{0,23} Ga$, $Li_{0,21} Ga$, $Li_2 Ga$, $Na_{0,25} Ga$, $Li_{1,5} Ga$,

$Li_{1,25} Ga$, $Na_{0,56} Ga$.

Le composé à clusters anioniques peut être hétéropolyatomique. Ainsi, il peut comprendre simultanément du bore et du gallium, de l'aluminium et du gallium. Par ailleurs, les ions structurant peuvent comprendre un mélange d'ions alcalins et alcalino-terreux.

Le composé d'insertion à réseau tridimensionnel ordonné utilisable conformément à l'invention pour constituer l'électrode d'un générateur électrochimique secondaire ne présente pas les inconvénients des alliages et des composés d'intercalation à réseau bidimensionnel selon l'art antérieur.

Le métal alcalin étant mis en place au sein d'un réseau tridimensionnel ordonné ou structuré, il ne se produit pas de désagrégation des électrodes (shedding) lors des opérations de cyclage, comme c'est le cas avec les alliages dans lesquels le réseau formé est désordonné. De plus, on n'observe pas, à l'inverse de ce qui intervient avec les alliages, des polarisations des réactions d'échange, provoquant l'irréversibilité des électrodes, d'où des pertes d'énergie à l'utilisation.

Par ailleurs, les composés utilisables selon l'invention présentant des potentiels chimiques plus proches des métaux alcalins que les composés d'intercalation à structure bidimensionnelle connus à base de graphite, il s'ensuit une augmentation de l'énergie stockée.

On observe également une meilleure stabilité des électrolytes avec les composés utilisables selon l'invention.

Enfin, par rapport aux électrodes utilisant des composés d'intercalation bidimensionnels à structure en feuillet, on observe pour les électrodes conforme à l'invention une meilleure réversibilité car les transports des métaux alcalins à l'état zéro-valent au sein des structures tridimensionnelles selon l'invention sont favorisés du fait qu'ils sont soumis à des gradients de champ électrique résultant de la présence des contre-ions alcalins ou alcalino-terreux structurant, alors que dans les structures graphitiques à feuillets les transports s'effectuent sans effet de champ en raison du caractère inerte de la structure d'accueil.

D'autres avantages de l'invention ressortent de la description qui suit relative à différents modes de réalisation, en regard du dessin annexé dans lequel :

La figure 1 représente l'évolution du potentiel d'un composé selon l'invention par rapport au lithium.

La figure 2 est également représentative du potentiel d'un composé selon l'invention soumis à une charge.

La figure 3 correspond à deux cycles charge-décharge.

La figure 4 correspond au dixième cycle charge-décharge.

Un exemple de générateur électrochimique selon l'invention comprend les composants suivants :

ELECTRODE NEGATIVE

Elle est élaborée à partir du composé $K_{0,23}$ Ga présentant une structure à clusters anioniques homopolyatomiques dans laquelle le gallium constitue l'élément de base.

La structure d'un tel composé a notamment été décrite dans l'article "A new intermetallic compound $K_3$ $Ga_{13}$..." C. BELIN paru dans la revue Acta Crystallographica (1980) B 36 1339-1343.

La phase $K_{0,23}$ Ga (ou $K_3$ $Ga_{13}$) se caractérise par le fait que l'on y observe deux types de clusters (icosaèdrique et octadécaèdrique) reliés entre eux par des liaisons directes et des atomes de gallium isolés. Les atomes de potassium occupent des canaux parallèlement à l'axe b du cristal.

Un tel composé présente des propriétés d'insertion du lithium susceptible de conduire à $Li_x$ $K_{0,23}$ Ga, $0 \leqslant x \leqslant 6$

Ce composé peut donc constituer l'électrode négative d'un générateur électrochimique.

La réduction du composé $K_{0,23}$ Ga en présence de lithium, pour conduire au matériau actif $Li_x$ $K_{0,23}$ Ga, peut être réalisée par voie électrochimique dans un solvant polaire stable, tel que le dioxolanne, le 2 méthyl tétrahydrofuranne, le tétrafurfuryl éther, un sel fondu ou un solvant solide tel que le polyoxyéthylène.

On peut également opérer une réduction chimique par insertion de lithium zérovalent au moyen d'une solution de lithium dans l'ammoniaque liquide.

ELECTRODE POSITIVE

Elle peut comporter un composé tel que $Li_zFeS_2$, $Li_zNiPS_3$ $Li_zTiS_2$, avec $0 < z < 4$, un composé tel que $Li_yMnO_2$ avec $y \leqslant 1$, le soufre, des polysulfures, $SO_2$, $SOCl_2$.

ELECTROLYTE

Il comporte avantageusement du dioxolanne renfermant en solution du perchlorate de lithium $ClO_4Li$, mais peut aussi être un sel fondu, tel qu'un mélange de chlorures alcalins, par exemple LiCl-KCl, ou un solvant solide tel que du polyoxyéthylène dans lequel a été dissous un sel porteur, par exemple un sel alcalin.

Il peut également être constitué par $SO_2$ ou $SOCl_2$ liquide.

Selon un exemple de réalisation, de manière à constituer l'électrode négative, on utilise environ 25 mg du composé $K_{0,23}$ Ga. Ce matériau est mélangé avec environ 10 mg d'un composé conducteur constitué de graphite et de noir d'acétylène. Pour intercaler le lithium par voie

électrochimique, une électrode constituée par le matériau précité est montée dans le dioxolanne face à une électrode de lithium qui agit comme fournisseur d'ions $Li^+$. Les atomes de lithium vont au cours de la réduction progressivement remplir "l'éponge moléculaire" de $K_{0,23}$ Ga en effectuant progressivement un transfert de charge de la structure polyanionique vers l'ion lithium.

Ce processus est clairement mis en évidence en réduisant électrochimiquement la structure de $K_{0,23}$ Ga pendant des temps courts (de l'ordre de 10 minutes) et en laissent relaxer le potentiel jusqu'à sa valeur d'équilibre pendant les dix minutes suivantes.

On obtient alors la courbe de pseudo-équilibre de la figure 1 qui met en évidence les différents composés définis qui se forment et leur énergie libre par rapport au lithium.

Sur cette figure, on a représenté en ordonnées le potentiel E en volts de $Li_x$ $K_{0,23}$ Ga par rapport à Li ; en abscisses, on a porté x le coefficient affecté à Li.

Il est ainsi possible de définir un certain nombre de domaines d'électroactivité distincts.

1/ $x \leqslant 0,8$, l'énergie libre y est voisine de 1,0 V par rapport au lithium. Ce domaine est, compte tenu de ce potentiel, de peu d'intérêt pratique.

2/ Un domaine étroit $0,8 < x < 1,0$, dont le potentiel standard par rapport au lithium est voisin de 550 mV.

3/ Un domaine large $1 \leqslant x \leqslant 2$ , caractérisé par une démixion en phase solide. Le potentiel de ce domaine est voisin de 280 mV par rapport au lithium.

4/ Un domaine très large $2 \leqslant x \leqslant 4$, dans lequel le potentiel est en-dessous de 80 mV.

Comme le montre donc cette analyse, il existe un domaine thermodynamiquement très favorable au stockage d'énergie correspondant à $1 \leqslant x \leqslant 4$.

Il est donc possible d'estimer la valeur supérieure de capacité massique à 1020 mAh/g contre 990 théorique pour l'électrode d'aluminium. En énergie, pour une électrode positive à 2 volts par rapport à une électrode de lithium, cela donne 1887 mWh/g pour $K_{0,23}$ Ga et 1633 théorique pour une électrode d'aluminium.

Sachant que pratiquement l'électrode LiAl n'est pas capable d'assurer plus de 40% de rendement en cyclage peu profond et 25% de rendement théorique en cyclage profond, il est intéressant de connaître la réversibilité des composés $Li_x\ K_{0,23}$ Ga.

Pour ce faire il a été monté un élément Li $K_{0,23}$ Ga très semblable au précédent dans lequel a été inséré 35 mAh de lithium sous 100 microampères, soit au régime de C/350. Après stabilisation du potentiel le système à été rechargé sous 10 microampères.

Sur la courbe de la figure 2, on peut constater une remarquable réversibilité de l'ensemble du domaine $x > 1$, la polarisation de l'élément sous 10 microampères ne dépassant pas 100 mV.

Sur l'électrode obtenue conformément au procédé précité, on a effectué des tests de réversibilité sur une large profondeur de décharge.

Ainsi, l'électrode est déchargée jusqu'à 34 mAh (ce qui correspond approximativement à la formule $Li_{4,5}\ K_{0,23}$ Ga) sous un courant de 100 microampères. On opère ensuite une charge de 7 mAh, le potentiel de l'électrode restant au voisinage de 150 mV sur environ 6 mAh. Le système est ensuite réduit jusqu'à 45 mAh (ce qui correspond approximativement à la formule $Li_{5,8}\ K_{0,23}$ Ga) et rechargé jusqu'à 26 mAh ; la polarisation en charge sous 100 $\mu$A est alors de 250 mV. On réduit alors la masse active jusqu'au dépôt de lithium soit 45 mAh. Il est alors possible de cycler 15 mAh sans polarisation notable en électro-déposition de lithium.

Les résultats de ces essais ont été reportés sur la figure 3 où en abscisses a été porté le nombre Q de mAh échangés.

L'élément ayant préalablement été déchargé jusqu'à 35 mAh, on effectue sans vieillissement notable 10 cycles de charge-décharge entre $Li_2\ K_{0,23}$ Ga et $Li_4\ K_{0,23}$ Ga. Il y a alors deux équivalents expérimentalement rechargeables, soit une capacité massique pratique de 680 mAh/g au potentiel du lithium contre 430 pratique au potentiel de 350 mV pour l'électrode de LiAl.

Les résultats de ces essais ont été reportés sur la figure 4.

Les propriétés qui contrôlent la bonne réversibilité de $K_{0,23}$ Ga sont donc :

- la structure en clusters anioniques,

- les propriétés de conduction métallique d'une telle structure.

L'intérêt de ces structures est qu'elles contiennent des canaux dans lesquels viennent s'insérer les atomes alcalins. Ces canaux apparaissent parmi un empilement non compact de polyèdres de gallium reliés entre eux par des liaisons directes et par des liaisons mettant en jeu des atomes de gallium isolés à basse coordination pouvant conférer à l'édifice une certaine flexibilité mise à profit pour l'insertion d'atomes alcalins plus petits (lithium par exemple). $K_3Ga_{13}$, orthorhombique présente une compacité relativement faible (0,57) pour un alliage intermétallique ce qui en fait une structure "hôte" intéressante ; la compacité est encore plus faible pour la phase non stoechiométrique $Li_3Ga_{14}$ rhomboédrique, déficiente en lithium (0,43).

Des structures du même type ont été trouvées dans des phases riches en bore telles que $NaB_{0,84}B_{14}$ ; leur compacité faible (0,47) les rapproche des phases avec le gallium. Dans les phases riches en bore, le sous-réseau de bore présente des cavités suffisamment larges pour recevoir des atomes de sodium, de magnésium ou d'aluminium. Toutes proportions considérées et bien que la compacité de ces phases soit faible, les cavités sont plus étroites que celles observées dans les phases riches en gallium où des atomes interstitiels tels que K, Rb, Cs peuvent être introduits.

Le composé $Li_{0,21}$ Ga a également été testé.

Le potentiel de l'électrode chute dans ce cas très rapidement au potentiel du lithium lorsque le courant appliqué sur 25 mg d'électrode dépasse la dizaine de microampères. Le lithium ainsi électrodéposé sur la structure à clusters est rechargeable et il ne semble pas qu'il y ait instabilité du lithium lorsqu'il est piégé dans une telle structure. Le rendement en charge au 1er cycle sous 100 $\mu$A est alors voisin de 100%.

Des bons résultats ont également été obtenus avec le composé $Rb_{0,14}$ Ga ( ou Rb $Ga_7$) dans lequel le lithium électrodéposé est réversible au même titre qu'il l'est dans $K_{0,23}$ Ga.

REVENDICATIONS

1/ Electrode pour générateur électrochimique secondaire fonctionnant en milieu non aqueux, dont le matériau actif, constitué par un métal alcalin à l'état zéro valent, est inséré dans un composé, caractérisée par le fait que ledit composé d'insertion recevant le métal alcalin présente un réseau tridimensionnel ordonné et est formé par au moins un composé intermétallique à clusters anioniques polyatomiques, dont les atomes sont choisis parmi le gallium, le bore et l'aluminium et dont les contre-ions structurant sont choisis parmi les ions alcalins et alcalino-terreux.

2/ Electrode selon la revendication 1, caractérisée par le fait qu'elle répond à la formule $A_z M_y G$ dans laquelle :

- A représente le métal alcalin constituant le matériau actif,
- M est un métal alcalin ou alcalino-terreux de structure,
- G est choisi parmi le gallium, le bore et l'aluminium,
- $0 \leqslant z \leqslant 6$
- $0,05 \leqslant y \leqslant 2$

3/ Electrode selon la revendication 2, caractérisée par le fait que G étant le gallium, M est choisi parmi Li, Na et K.

4/ Electrode selon la revendication 3, caractérisée par le fait que le composé intermétallique à clusters répond à une formule choisie dans le groupe formé par :

$Li_2 Ga$, $Li_{0,21} Ga$, $Na_{0,25} Ga$, $K_{0,23} Ga$, $Li_{1,5} Ga$, $Li_{1,25} Ga$, $Na_{0,56} Ga$.

5/ Electrode selon l'une des revendications 1 à 4, caractérisée par le fait que le composé intermétallique à clusters est hétéroatomique.

6/ Electrode selon la revendication 5, caractérisée par le fait que le composé intermétallique à clusters est à base de bore et gallium.

7/ Electrode selon la revendication 5, caractérisé par le fait que le composé intermétallique à clusters est à base d'aluminium et de gallium.

8/ Electrode selon l'une des revendications 1 à 7, caractérisée par le fait que les ions structurant comprennent un mélange d'ions alcalins et alcalino-terreux.

9/ Procédé de réalisation d'une électrode selon l'une des revendications 1 à 8, caractérisée par le fait que le métal alcalin inséré est du lithium et que l'insertion du lithium dans la structure d'accueil, formée par le composé intermétallique à clusters anioniques polyatomiques,est réalisée par réduction dudit composé en présence de lithium.

10/ Procédé selon la revendication 9, caractérisé par le fait que la réduction est réalisée par voie électrochimique dans un solvant polaire stable.

11/ Procédé selon la revendication 9, caractérisé par le fait que la réduction est réalisée par voie chimique, au moyen d'une solution de lithium dans l'ammoniaque liquide.

12/ Générateur électrochimique secondaire fonctionnant en milieu non aqueux comportant une électrode positive, un électrolyte et une électrode négative définie selon l'une des revendications 1 à 8.

13/ Générateur selon la revendication 12, caractérisé par le fait que l'électrode positive comporte un composé choisi dans le groupe comprenant $Li_zFeS_2$, $Li_zNiPS_3$, $Li_z$,$TiS_2$, z étant compris entre 0 et 4, $Li_yMnO_2$ avec $y \leqslant 1$, le soufre, les polysulfures, $SO_2$, $SOCl_2$.

14/ Générateur selon l'une des revendications 12 et 13, caractérisé par le fait que l'électrolyte comporte du dioxolanne renfermant en solution du perchlorate de lithium.

15/ Générateur selon l'une des revendications 12 et 13, caractérisé par le fait que l'électrolyte est un électrolyte solide à base de polyoxyéthylène, dans lequel a été dissous un sel porteur.

16/ Générateur selon l'une des revendications 12 et 13, caractérisé par le fait que l'électrolyte est choisi dans le groupe formé par $SO_2$ et $SO\ Cl_2$ liquide.

17/ Générateur selon l'une des revendications 12 et 13, caractérisé par le fait que l'électrolyte comporte un sel fondu tel qu'un mélange de chlorures alcalins.

FIG.1

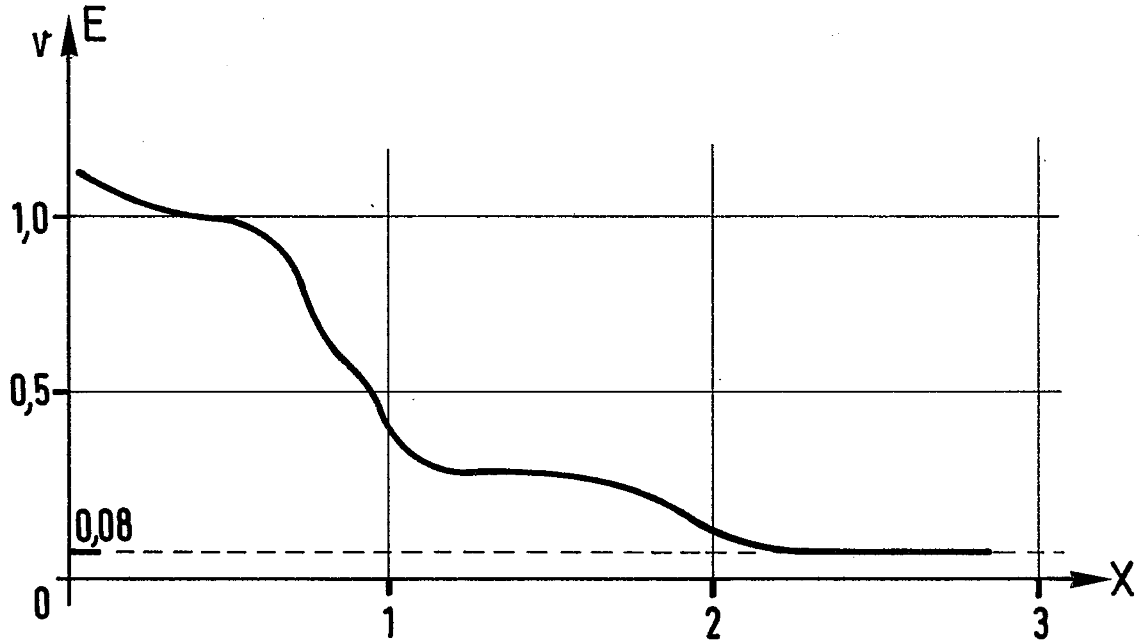


FIG.2

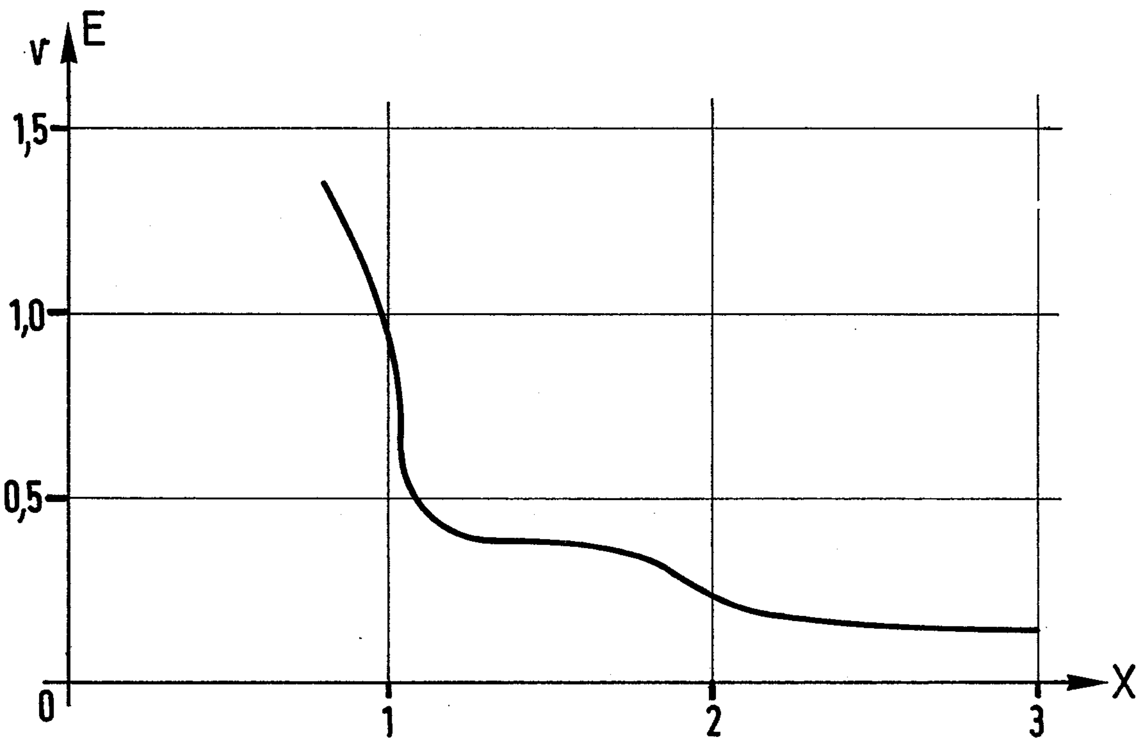

FIG.3

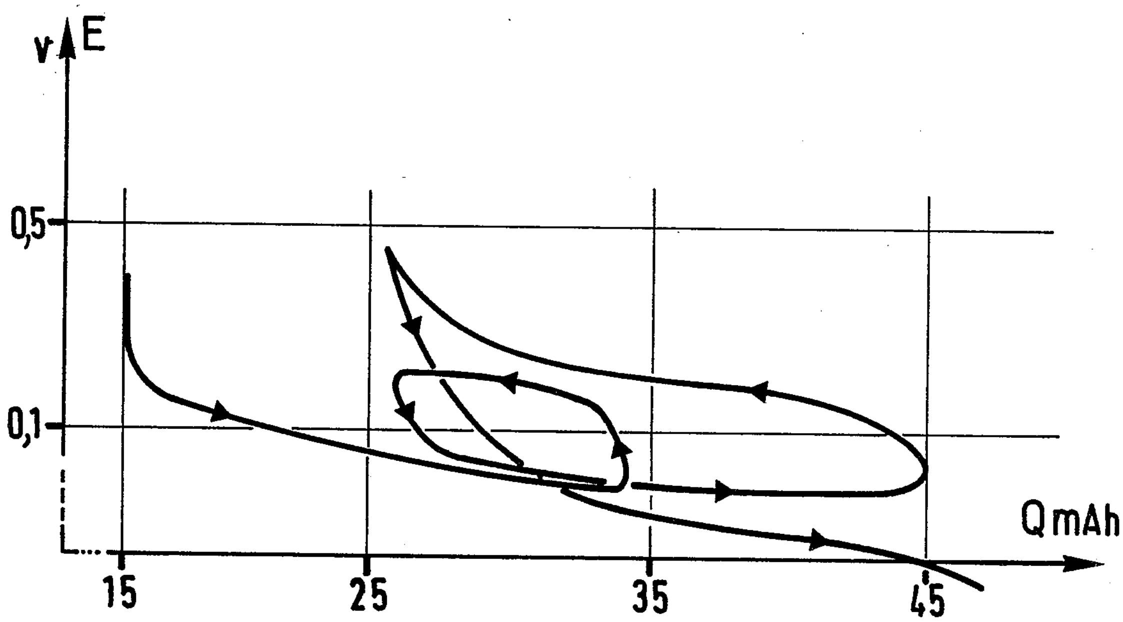


FIG.4

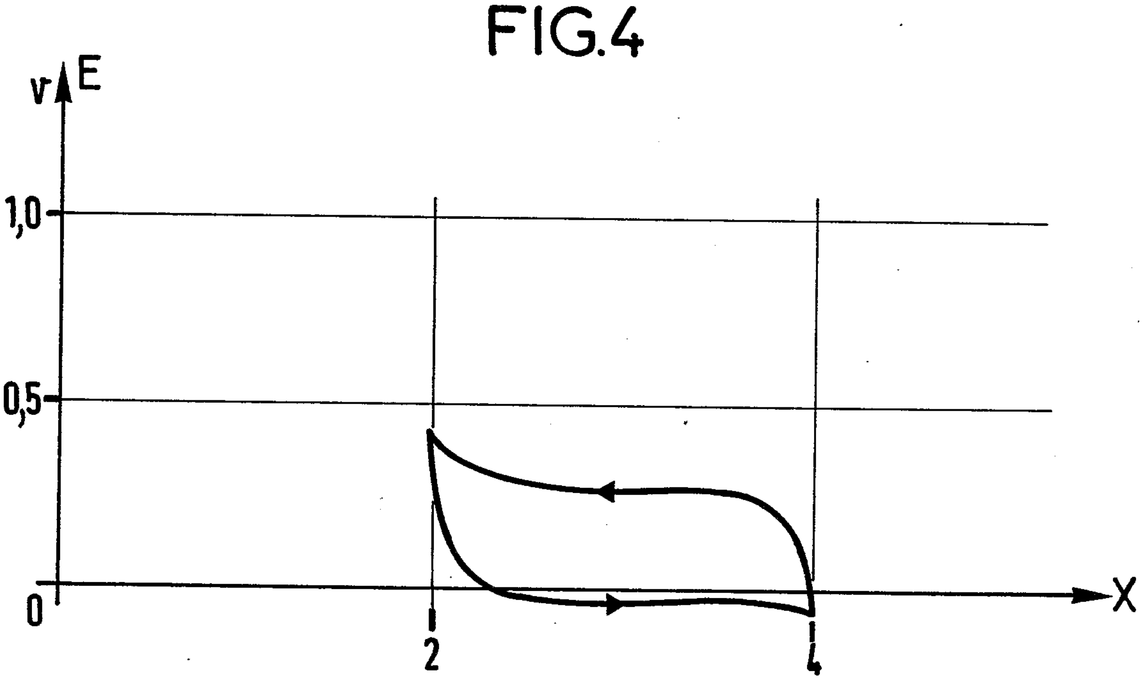

Office européen des brevets

**RAPPORT DE RECHERCHE EUROPEENNE**

0121709

Numéro de la demande

EP 84 10 1899

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl. 3) |
| X,Y | JOURNAL OF THE ELECTROCHEMICAL SOCIETY, vol. 129, no. 7, juillet 1982, pages 1513-1515, Manchester, New Hampshire, US; D. ERNST: "DSC study of two reactions in the lithium-boron alloy system" * Page 1513, colonne de gauche, page 1514, "discussion" * --- | 1,2,12,17 | H 01 M 4/40 |
| X,Y | JOURNAL OF ELECTROCHEMICAL SOCIETY, vol. 126, no. 5, mai 1979, pages 866-870, Princeton, US; S. DALLEK et al.: "Thermal analysis of lithium-boron alloys" * Page 869, "summary" * --- | 1,2,12,17 | |
| X,Y | DE-A-2 834 485 (RHEINISCH-WESTFÄLISCHES ELEKTRIZITÄTSWERK) * Revendications 1-5; page 8, alinéa 2; page 9, alinéas 2,3; page 10, alinéas 2,3; page 12, alinéa 2; pages 18-20 * --- | 1,2,5,9,10,12,13,14 | DOMAINES TECHNIQUES RECHERCHES (Int. Cl. 3) H 01 M |
| X,Y | FR-A-2 442 514 (A.N.V.A.R.) * Page 4, lignes 2-39; page 13, lignes 22-41; page 14 * --- -/- | 1,2,5,12,13,15 | |

Le présent rapport de recherche a été établi pour toutes les revendications

| Lieu de la recherche | Date d'achèvement de la recherche | Examinateur |
|---|---|---|
| LA HAYE | 22-06-1984 | DE VOS L.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503. 03.82

Office européen des brevets

**RAPPORT DE RECHERCHE EUROPEENNE**

0121709

Numéro de la demande

EP 84 10 1899



| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl. 3) |
| X,Y | ELECTROCHIMICA ACTA, vol. 24, 1979, pages 167-171, Pergamon Press, Ltd., GB; B.N. KABANOV et al.: "Formation of crystalline intermetallic compounds and solid solutions in electrochemical incorporation of metals into cathodes" * Page 168, colonne de gauche, dernier alinéa; colonne de droite, alinéa 1; page 170, colonne de droite, alinéas 5-7 * --- | 1,2,3, 9,12 | |
| X,Y | JOURNAL OF THE ELECTROCHEMICAL SOCIETY, vol. 128, no. 8, août 1981, pages 1636-1641, Manchester, New Hampshire, US; C.J. WEN et al.: "Electrochemical investigation of the lithium-gallium system" * Abrégé; pages 1638-1641 * --- | 1-4,12 | DOMAINES TECHNIQUES RECHERCHES (Int. Cl. 3) |
| X,Y | US-A-4 162 352 (RAYMOND A. SUTULA) * Colonne 4, lignes 16-61; colonne 6, lignes 5-25; colonne 8, lignes 37-68; colonne 9 * ----- | 1,2,12 ,17 | |

Le présent rapport de recherche a été établi pour toutes les revendications

| Lieu de la recherche | Date d'achèvement de la recherche | Examinateur |
|---|---|---|
| LA HAYE | 22-06-1984 | DE VOS L.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503. 03.82